# FASCICULE DE BREVET EUROPEEN

(11) **EP 0 954 469 B1**
(45) Date de publication et mention de la délivrance du brevet: **18.07.2007**
(21) Numéro de dépôt: 98956944.7
(22) Date de dépôt: 25.11.1998
(51) Int. Cl.: B64C 1/14, B29C 70/30

(54) **PROCEDE DE FABRICATION D'UN PANNEAU COMPOSITE ET PANNEAU AINSI OBTENU**
VERFAHREN ZUR HERSTELLUNG EINER VERBUNDPLATTE UND DAMIT HERGESTELLTE VERBUNDPLATTE
METHOD FOR MAKING A COMPOSITE PANEL AND RESULTING PANEL

(30) Priorité: 26.11.1997 FR 9715180
(43) Date de publication de la demande: 10.11.1999
(73) Titulaire: AEROSPATIALE Société Nationale Industrielle, 75781 Paris Cédex 16 (FR)
(72) Inventeur: PORTE, Alain, F-31770 Colomiers (FR); ANDRE, Robert, F-31320 Auzeville (FR)
(74) Mandataire: Thébault, Jean-Louis
(86) Numéro de dépôt international: PCT/FR1998/002521
(87) Numéro de publication internationale: WO 1999/026841

(56) Documents cités:
- US-A- 4 053 667
- US-A- 4 471 609
- US-A- 4 557 440
- US-A- 4 735 841
- US-A- 4 746 389
- US-A- 5 064 147

## Description

La présente invention concerne un procédé de fabrication d'un panneau composite monolithique articulé et le panneau obtenu, qui présente des caractéristiques mécaniques adaptées plus particulièrement dans la transmission des efforts, notamment pour des applications aux capots de fan de turboréacteur ou aux trappes des trains d'atterrissage.

Certains éléments d'un aéronef sont soumis à des contraintes mécaniques particulières du fait qu'ils sont mobiles et/ou démontables et qu'ils sont en contact avec l'extérieur, ce qui implique en plus une bonne résistance aux chocs.

Par ailleurs, étant montés sur des aéronefs, ces éléments doivent rester légers et insensibles à des fuites de fluides techniques ou de service : eau, huile, hydraulique.

Le panneau constituant l'élément a l'obligation de résister au feu et de répondre aux différentes normes qui établissent des tests de résistance minimale en cas de détérioration ou de rupture d'une pièce constituant ledit élément.

Les éléments énumérés ci-avant tels que les capots sont actuellement réalisés essentiellement à partir de trois procédés:
- structure sandwich composite,
- structure monolithique métallique, et
- structure monolithique composite ou hybride.

Pour toute la description et les revendications, on entend par "monolithique" une tôle, feuille ou plaque, à pli unique ou composée de plusieurs plis associés et solidarisés directement les uns aux autres, sans interposition d'une âme en matériau alvéolaire comme dans un panneau sandwich.

La structure sandwich composite est intéressante du point de vue du poids puisqu'elle comprend une peau extérieure aérodynamique de faible épaisseur, une peau intérieure également mince entre lesquelles est interposée une âme en matériau alvéolaire tel que du NIDA, ces trois constituants étant parfaitement solidarisés les uns aux autres.

Le document US-A-4 053 667 divulgue un procédé de fabrication d'un panneau composite monolithique. En une première étape, une plaque composite est drapée sur toute la surface d'un moule, en une deuxième étape, des noyaux de moulage sont placés selon un réseau sur la plaque dans les zones libres du panneau, en une troisième étape, un pli composite de résistance est drapé sur chaque noyau en sorte de réaliser des poutres à profil en Ω dont les ailes sont en contact avec la plaque, et enfin, après une quatrième étape de cuisson, les caractéristique mécaniques finales sont obtenues.

On note que les peaux sont minces car la structure sandwich permet d'atteindre facilement les résistances mécaniques générales recherchées. Ceci est aussi un inconvénient car ces peaux sont intrinsèquement fragiles et présentent une faible résistance aux impacts, surtout la peau externe. De plus, il faut ajouter des protections vis à vis du feu et de la foudre pour répondre aux contraintes techniques et réglementaires.

Quant à la structure sandwich elle-même, on note qu'en cas de fuite, l'âme en matériau alvéolaire ou en mousse piège les fluides et peut provoquer une certaine accumulation que l'on cherche précisément à éviter.

Ces structures sandwich sont aussi relativement difficiles à réparer car la pose d'une plaque de réparation en matériau polymère ou métallique par rivets est très délicate, ce qui n'est pas satisfaisant dans le cas des aéronefs, pour les exploitants et les services maintenance.

La structure monolithique métallique présente des défauts inhérents au matériau notamment un bilan masse défavorable. De plus, il faut riveter des cadres de renfort directement sur les plaques métalliques et les risques de corrosion subsistent.

De plus, lorsqu'il s'agit d'éléments mobiles tels que des capots ou des volets, il est souvent difficile de positionner le cadre rapporté tout en assurant un bon alignement des ferrures d'articulation. Généralement, les cadres sont éclissés sur les ferrures pour transmettre les différents efforts auxquels est soumis l'élément mobile.

La structure monolithique composite ou hybride comprend une seule peau renforcée par un cadre avec des raidisseurs composites ou métalliques liés à ladite peau par des rivets ou collés.

Dans ce cas, il est difficile de poser les ferrures d'articulation sauf si la peau est d'une épaisseur supérieure à ce qui est nécessaire, pour permettre la reprise des efforts tranchants notamment.

Ceci est préjudiciable au poids et au coût.

On connaît un brevet US-A-4 471 609 qui décrit un capot en matériau composite de type "core cowl", c'est à dire de protection du coeur du moteur, ce qui est différent d'un "fan cowl" qui est un capot de protection au droit des fans. Les contraintes techniques liées sont différentes en fonction de la zone de positionnement. Dans ce brevet américain, le capot est utilisé pour limiter la déformée flexion du moteur de la portion située dans la zone très chaude, tout en reprenant des efforts importants. Le capot décrit dans ce brevet ne comporte aucune trappe ou porte d'accès car les équipements auxquels on doit avoir accès, sont situés hors de ces zones très chaudes.

Un autre problème se pose lorsqu'il faut ménager des emplacements pour poser des portes d'accès, des trappes de visite ou des grilles de ventilation ou encore d'autres organes dans ces éléments mobiles qui sont réalisés en matériau composite.

On comprend bien que l'emplacement de la porte d'accès, de la trappe de visite et/ou d'une grille est déterminé par la position de l'organe à visiter.

Or les positions des ferrures d'articulation ont elles aussi un positionnement bien précis, déterminé par l'avionneur, ce qui conduit à des problèmes particuliers lorsque le cadre prévu pour la reprise des efforts à partir des ferrures coïncide avec une porte d'accès, une trappe de visite ou une grille de ventilation. L'invention propose de résoudre ce problème.

Ainsi, la présente invention a pour objet un procédé de fabrication d'un panneau composite monolithique selon la revendication 1.

Certaines poutres axiales peuvent être curvilignes et/ou à section transversale variable le long de leur axe longitudinal.

Il est possible d'ajouter un pli de matériau fortement conducteur entre le moule et le premier pli.

L'invention a aussi pour objet le panneau composite monolithique articulé, selon la revendication 8.

La présente invention qui est maintenant décrite en regard des dessins annexés qui représentent un capot de fan de turboréacteur pour donner un exemple d'application particulièrement adapté mais non limitatif.

Les différentes figures représentent :
- figure 1 , une vue en perspective d'un capot de fan de turboréacteur fabriqué par la mise en oeuvre du procédé selon l'invention,
- figure 2, une vue de face, côté intérieur, du capot de la figure 1 , montrant les cheminements de reprise des efforts.
- figure 3, une vue en coupe longitudinale du capot des figures 1 et 2, monté sur l'ossature moteur,
- figure 4, une vue en coupe de détail du panneau obtenu par la mise en oeuvre du procédé,
- figure 5, une vue en coupe de détail du montage d'une ferrure d'articulation sur le panneau,
- figure 6, une vue de détail du montage des verrous à grenouillère permettant de lier deux capots de fan droit et gauche d'un même turboréacteur, et
- figure 7, une vue de détail d'un capot semblable à celui de la figure 2 mais à poutres circonférentielles curvilignes.

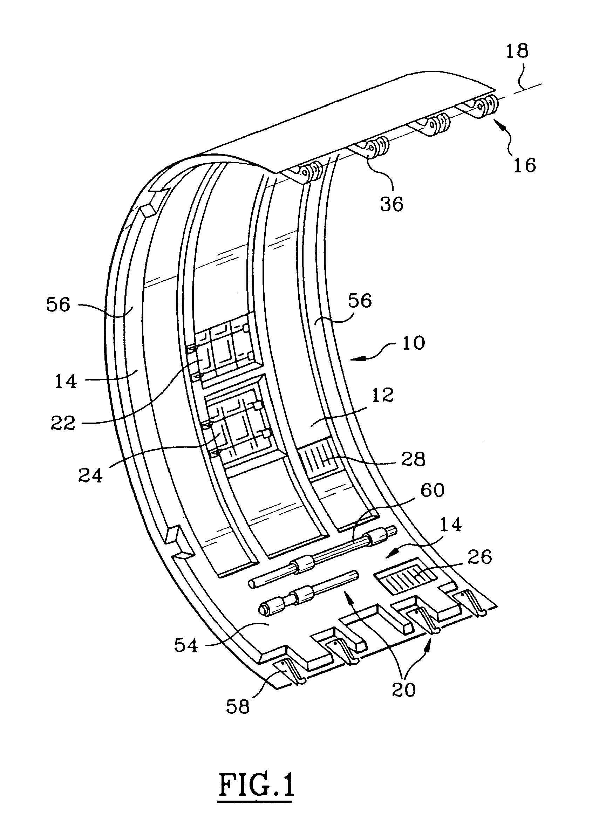

Sur la figure 1 , on a représenté un capot 10 qui comprend un panneau 12 avec des moyens raidisseurs 14 intégrés, formant caisson.

Ce capot comprend des moyens 16 de montage articulés autour d'un axe 18 et des moyens 20 de verrouillage.

Dans l'exemple représenté, deux portes 22 et 24 d'accès sont nécessaires en des endroits bien précis du panneau ainsi qu'une grille 26 de ventilation et une trappe 28.

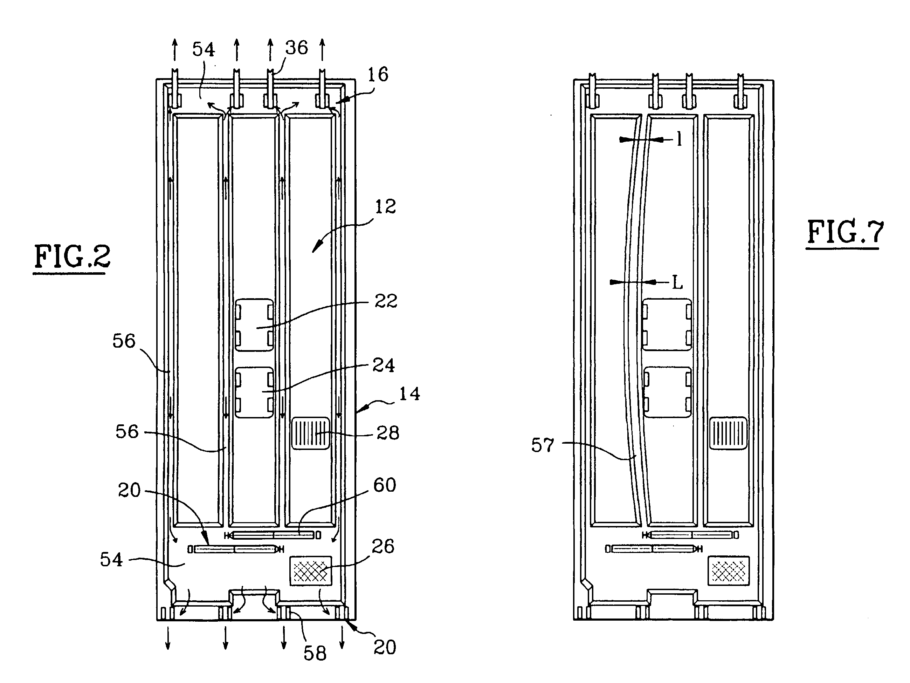

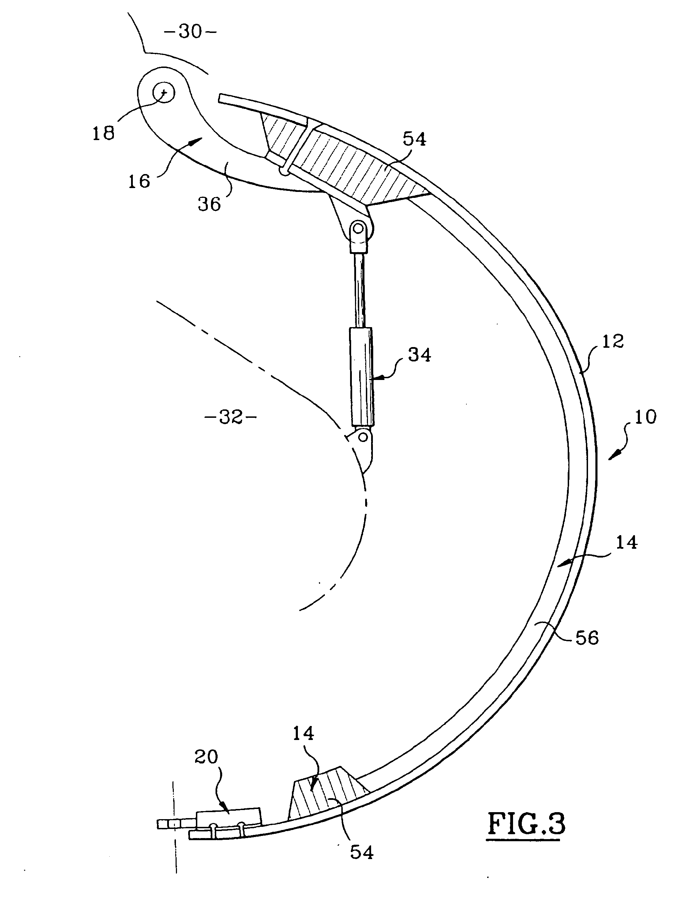

Sur les figures 2 et 3, les références sont identiques à celles de la figure 1 pour désigner les mêmes pièces.

On note particulièrement sur les figures 1 et 3 que le panneau est en forme, en l'occurrence, celle du capotage général du turboréacteur dont fait partie le capot 10 de fan.

Sur la figure 3, on a aussi représenté schématiquement la structure portante c'est-à-dire le mât 30 ainsi que la motorisation 32, elle-même.

On note aussi, sur la figure 3, les moyens 34 d'ouverture du capot, en l'occurrence un vérin 35, qui assurent les mouvements de rotation du capot autour de l'axe 18 grâce à des ferrures 36 d'articulation constituant les moyens 1 6 de montage articulé. Ce vérin est rapporté sur la poutre axiale de bordure, la même poutre qui supporte les ferrures.

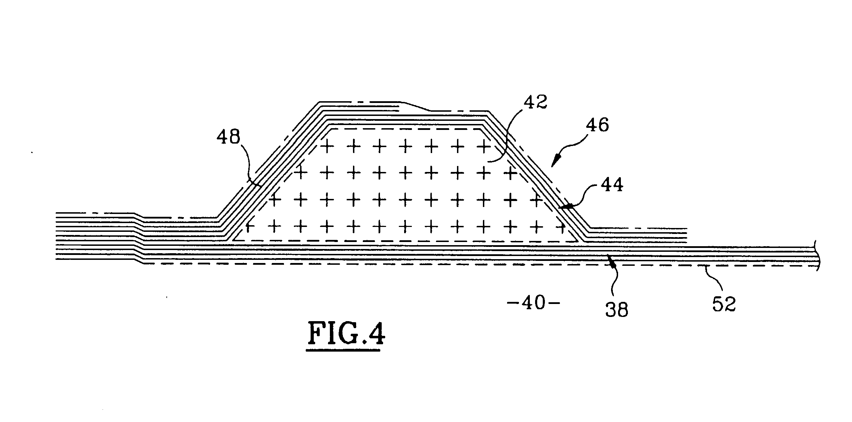

Le procédé selon l'invention consiste à intégrer les moyens 14 raidisseurs au panneau 12. On se reporte utilement à la figure 4 pour détailler le procédé de fabrication.

On réalise une plaque 38 à plusieurs plis, au nombre de quatre pour fixer les idées.

Une première étape consiste à réaliser les 4 premiers plis par drapage sur toute la surface d'un moule 40, de forme conjuguée à celle de la face extérieure en sorte de réaliser une plaque monolithique.

Dans le cas où le panneau et les raidisseurs sont réalisés en deux étapes, une cuisson du panneau est nécessaire à ce stade.

Une deuxième étape consiste à positionner des noyaux 42 de moulage en matériau léger, type matériau alvéolaire en nids d'abeilles, pour former des reliefs, en contournant les zones correspondant aux portes et autres trappes ou grilles. Les noyaux sont donc disposées dans les zones libres, en vue de réaliser des poutres qui doivent assurer la reprise des efforts.

Une troisième étape consiste à draper ces noyaux 42 de plis 44 de résistance pour former des poutres 46 à profil en Ω, les ailes de ce profilé en Ω étant intimement liées à la plaque 38 monolithique.

Des plis 48 de renfort sont éventuellement rapportés pour les poutres situées en bordure de panneau comme cela sera vu ultérieurement.

Une cuisson est ensuite nécessaire pour donner aux différents polymères des matériaux composites leurs caractéristiques mécaniques finales. Cette cuisson est réalisée en une ou deux cuissons suivant les besoins et les matériaux employés.

Dans le cas de panneaux en matériau composite, la face externe comprend éventuellement un pli 52 supplémentaire composé d'une feuille conductrice, par exemple en treillis de cuivre, pour améliorer les qualités conductrices. Ce pli est en réalité le premier lorsqu'il est nécessaire puisqu'il est déposé directement sur le moule. Cette feuille conductrice est optionnelle car l'épaisseur de la peau, dans le mode de réalisation présenté, peut être suffisante pour s'en passer.

On constate, dans le cas du capot retenu pour illustrer l'invention, que les moyens 14 raidisseurs comprennent un réseau de poutres 54 axiales qui suivent sensiblement les génératrices du profil courbe du panneau et de poutres 56 circonférentielles qui suivent directement le profil courbe du panneau. Ces poutres ont de préférence une structure en caisson pour présenter de bonnes performances en résistance à la torsion notamment.

La particularité des poutres axiales est d'offrir un cheminement des efforts vers les ferrures d'articulation, principalement pour les efforts venant des poutres circonférentielles non alignées avec lesdites ferrures.

Dans certains cas, il peut être avantageux et/ou nécessaire de disposer de plusieurs poutres axiales supérieures, inférieures et même intermédiaires en fonction des dimensions du panneau, des ouvertures imposées, des résistances demandées et surtout des points d'ancrage de ces différents éléments.

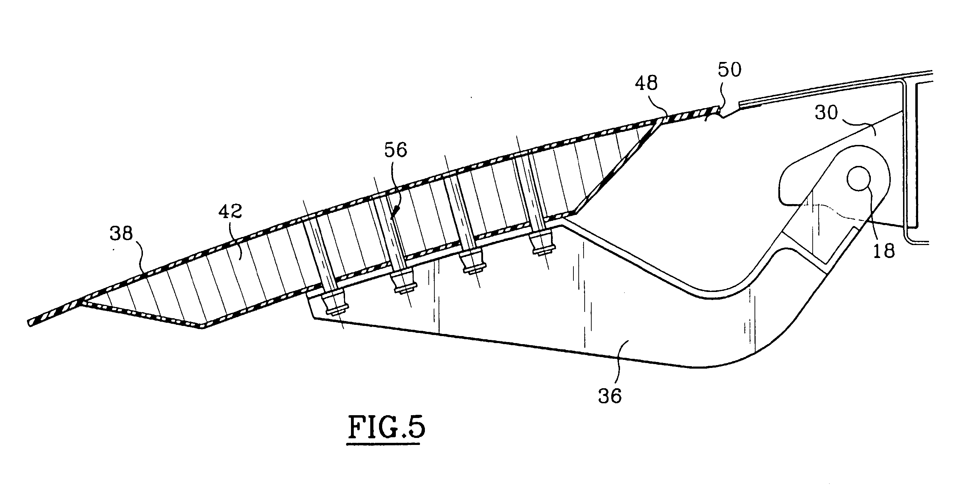

C'est ainsi que sur la figure 5, on constate que chaque ferrure 36 d'articulation est rapportée directement sur la poutre 54 axiale supérieure, par boulonnage 56. Ceci permet la reprise des efforts importants et la diffusion des efforts tranchants et de flexion à l'ensemble du panneau et des poutres circonférentielles, axiales intermédiaire et axiales inférieure ainsi que cela est montré sur la figure 2 par les différentes flèches.

Pour le montage des ferrures directement sur les poutres, il faut simplement prendre la précaution de disposer lors de la fabrication un noyau en matériau de forte densité, résistant à la compression en sorte de supporter les contraintes de compression lors du serrage.

Dans le cas de la mise en place des verrous 58 et 60 des moyens 20 de verrouillage, on note que les localisations sont différentes pour chacun des types de verrous.

Ainsi, les verrous 60 sont rapportées sur la poutre 54 axiale inférieure. On note que les efforts exercés sur les biellettes de ces verrous sont transmis sur tout le panneau à travers le réseau des poutres axiales et circonférentielles.

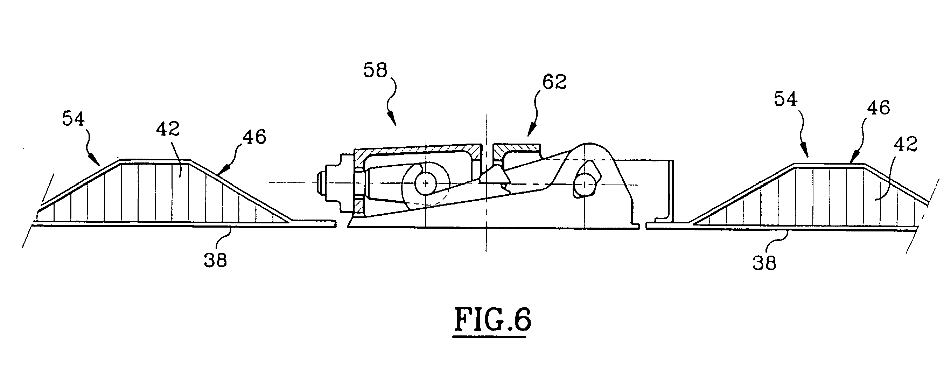

Dans le cas des verrous 58, on se reporte à la figure 6 sur laquelle on peut constater que les verrous à grenouillère 62 sont rapportés, pour la partie fixe, directement sur le panneau 12.

En effet, on a pu noter que, dans le cas d'un panneau monolithique, l'épaisseur est suffisante pour cela.

Il est par contre prévu de venir se fixer directement sur les poutres axiales ou radiales lorsque les efforts sont importants comme dans le cas des ferrures de liaison du panneau avec le mât ci-dessus ou dans le cas des trappes de trains d'atterrissage.

On note que les organes imposés comme les portes d'accès, trappes et/ou grilles se retrouvent aux emplacements qui sont dictés par les besoins. On note que le réseau des poutres axiales et circonférentielles permet d'éviter ces emplacements réservés tout en permettant la reprise des efforts et le report de ces efforts sur toute la structure.

Les avantages d'un tel procédé de fabrication sont nombreux.

Tout d'abord, l'épaisseur du panneau monolithique confère au capot fini une bonne résistance aux impacts.

Ensuite, dans le cas où une ferrure d'articulation viendrait à casser, le capot utilisant un panneau avec les moyens raidisseurs intégrés présente un excellent comportement car les efforts sont répartis sur l'ensemble des poutres et à travers la plaque. Ces poutres, avec un fort moment d'inertie, disposent de grandes capacités de résistance mécanique, qu'il s'agisse de flexion, de torsion ou de cisaillement.

Ceci est d'autant plus intéressant que, dans l'exemple abordé d'un capot de fan, les efforts les plus importants sont exercés en vol et c'est là qu'une ferrure peut casser mais vu le nombre de points de liaison et le réseau de poutres axiales et circonférentielles formant des raidisseurs intégrés, le comportement est particulièrement satisfaisant. La rupture d'une ferrure peut donc être compensée.

Si une fuite d'un fluide venait à se produire, on note que les volumes susceptibles d'absorber des liquides sont très réduits puisqu'ils se limitent aux seules poutres, ce qui résout les problèmes des modes de réalisation de l'art antérieur.

Le bilan masse est très intéressant et permet même de recourir à des plaques ayant un nombre important de plis. En effet, les volumes de poutre sont réduits et le poids, grâce aux noyaux en matériau léger, est très faible. Ceci permet d'augmenter de façon sensible la résistance aux impacts.

Les problèmes de corrosion sont assurément supprimés puisqu'aucun organe du panneau n'est métallique.

Les problèmes de résistance au feu sont solutionnés par l'épaisseur même de la plaque constituant le panneau, suffisante pour répondre aux normes en vigueur.

Le problème des réparations par pièces boulonnées est supprimé car les pièces peuvent être fixées aisément et directement sur le panneau.

Selon une variante de l'invention, on peut noter que dans certains cas, plutôt que de prévoir une poutre intermédiaire, les poutres circonférentielles peuvent s'écarter l'une de l'autre, c'est-à-dire être des poutres 57 curvilignes dans le plan déjà courbe du panneau, voir sur la figure 7. Ceci permet aussi de contourner certains obstacles dans certains cas simples.

En variante des poutres 57 curvilignes, les poutres peuvent aussi être chacune à section variable le long de leur axe longitudinal, c'est-à-dire, plus épaisse de part et d'autre à proximité du point de courbure. Ceci permet de répondre à des contraintes plus importantes en ces points.

Dans les différents cas évoqués ci-avant, la hauteur des poutres axiales est avantageusement mais non nécessairement supérieure à celle des poutres circonférentielles pour faciliter le drapage. Les dimensions définitives sont données par le calcul.

L'invention confère surtout l'avantage de dissocier le positionnement des ferrures et des organes accessoires mais néanmoins nécessaires que sont les portes, trappes et autres grilles.

Dans le cas des aéronefs, la localisation des ferrures est imposée par l'avionneur et un autre avantage qui résulte du procédé et du panneau selon l'invention avec le réseau de poutres, est la possibilité de respecter ces emplacements tout en autorisant aussi le positionnement des portes, trappes ou grilles là où il convient dans le panneau, sans que le positionnement des ferrures et les reprises des efforts correspondants limitent les choix. Cette possibilité rend la conception plus souple et permet dans certains cas de résoudre des problèmes de localisation qui ne trouvaient pas de solution.

On constate grâce aux poutres axiales que cela ne pose aucun problème et que les poutres circonférentielles n'ont pas à être alignées avec les ferrures. De plus, même en cas de rupture d'une des ferrures, les efforts sont reportés et répartis grâce à la poutre axiale qui les supporte.

Ceci est l'essence même de la présente invention.

## Revendications

1. Procédé de fabrication d'un panneau composite monolithique (12) prévu pour être articulé sur un support, notamment un panneau en forme articulé au moyen de ferrures pour la réalisation d'un capot de fan d'un turboréacteur ou d'une trappe d'un train d'atterrissage dans un aéronef, ledit panneau comportant un réseau de poutres (46, 54, 56, 57) axiales et circonférentielles et comprenant des ouvertures réservées pour la mise en place d'éléments de service tels que des portes d'accès (22, 24), des trappes (28) et/ou des grilles de ventilation (26), **caractérisé en ce qu'**il consiste :
en une première étape, à réaliser une plaque (38) à un ou plusieurs plis en matériau composite par drapage sur toute la surface d'un moule de forme conjuguée à celle de la face extérieure du panneau à réaliser
en une deuxième étape, à placer sur ladite plaque (38) des noyaux de moulage en matériau léger (42), disposés selon ledit réseau dans les zones libres du panneau (12) ;
en une troisième étape, à draper sur lesdits noyaux (42) au moins un pli de résistance (44) en matériau composite, en sorte de réaliser des poutres (46) à profil en Ω dont les ailes sont en contact avec ladite plaque (38), une quatrième étape de cuisson, les caractéristiques mécaniques finales des matériaux composites étant obtenues par ladite étape de cuisson,
les poutres (54) axiales dudit réseau étant disposées en sorte d'offrir un cheminement vers des ferrures des efforts venant des poutres circonférentielles non alignées avec ces ferrures en contournant les ouvertures pour desdits éléments de service.

2. Procédé de fabrication d'un panneau composite monolithique articulé selon la revendication 1, **caractérisé en ce que** l'on réalise des poutres circonférentielles curvilignes (57).

3. Procédé de fabrication d'un panneau composite monolithique articulé selon la revendication 1 ou 2, **caractérisé en ce que** l'on fait varier la section transversale d'au moins une poutre (54, 56, 57) le long de son axe longitudinal.

4. Procédé de fabrication d'un panneau composite monolithique articulé selon l'une des revendications 1 à 3, **caractérisé en ce que** les noyaux de moulage (42) sont en matériau alvéolaire, notamment en matériau alvéolaire de forte densité pour les poutres (56, 57) susceptibles de recevoir des moyens de montage (16) et/ou des moyens de verrouillage (20).

5. Procédé de fabrication d'un panneau composite monolithique articulé selon l'une des revendications 1 à 4, **caractérisé en ce que** la cuisson s'effectue en deux étapes, l'une après la réalisation de la plaque en forme (38) et l'autre après la mise en place des poutres (46) sur ladite plaque.

6. Procédé de fabrication d'un panneau composite monolithique articulé selon l'une des revendications 1 à 5, **caractérisé en ce que** préalablement à la réalisation de la première étape, on dispose sur le moule un pli (52) de matériau fortement conducteur.

7. Procédé de fabrication d'un panneau composite monolithique articulé selon l'une des revendications 1 à 6, **caractérisé en ce que** des plis de renfort (48) sont rapportés sur les poutres (46, 54, 56) situées en bordure de panneau.

8. Panneau composite monolithique articulé obtenu conformément au procédé selon l'une des revendications 1 à 7, destiné à constituer un capot de fan d'un turboréacteur ou une trappe de train d'atterrissage, **caractérisé en ce qu'**il comporte des moyens (16) de montage tels que des ferrures (36) d'articulation et des moyens (20) de verrouillage, lesdits moyens de montageet certains desdits moyens de verrouillage étant directement rapportés sur des poutres (54) axiales d'un réseau de poutres comportant des poutres axiales et des poutres circonférentielles.

9. Panneau selon la revendication 8 **caractérisé en ce que** lesdits moyens de montage et certains desdits moyens de verrouillage sont directement rapportés sur des poutres (54) par boulonnage.

10. Capot constitué par un panneau selon la revendication 8 ou 9, **caractérisé en ce qu'**il comprend des moyens d'ouverture (34) sous forme notamment d'un vérin (35), lesdits moyens d'ouverture étant fixés sur la même poutre axiale (54) qui supporte les ferrures (36) d'articulation.

11. Capot constitué par un panneau selon la revendication 8 ou 9, **caractérisé en ce que** les poutres axiales (54) devant recevoir des moyens (16) de montage et/ou des moyens (20) de verrouillage comprennent des noyaux (42) en matériau alvéolaire de forte densité.

## Claims

1. A method of manufacturing a single-piece composite panel (12) designed to be jointed on a support, in particular a shaped panel jointed by means of fittings for producing a jet-engine fan cover or a hatch for landing gear in an aircraft, said panel comprising a network of axial and circumferential beams (46, 54, 56, 57) comprising openings reserved for fitting service elements such as access doors (22, 24), hatches (28) and/or ventilation grilles (26), **characterised in that** it comprises:
in a first step, producing a sheet (38) with one or more layers of composite material by draping over the entire surface of a mould with a shape conjugate to that of the external face of the panel to be produced;
in a second step, placing on said sheet (38) moulding cores (42) made from lightweight material, disposed in accordance with said network in the free areas of the panel (12);
in a third step, draping on said cores (42) at least one resistance layer (44) of composite material, so as to produce beams (46) with an Ω profile, the wings of which are in contact with said sheet (38);
a fourth curing step, the final mechanical characteristics of the composite materials being obtained by said curing step,
the axial beams (54) in said network being disposed so as to offer a routing, to the fittings, of the forces coming from the circumferential beams not aligned with these fittings, passing round the openings for said service elements.

2. A method of manufacturing a jointed single-piece composite panel according to claim 1, **characterised in that** curved circumferential beams (57) are produced.

3. A method of manufacturing a jointed single-piece composite panel according to claim 1 or 2, **characterised in that** the transverse section of at least one beam (54, 56, 57) is varied along its longitudinal axis.

4. A method of manufacturing a jointed single-piece composite panel according to one of claims 1 to 3, **characterised in that** the moulding cores (42) are made from alveolar material, in particular from high-density alveolar material for the beams (56, 57) suitable to receive mounting means (16) and/or locking means (20).

5. A method of manufacturing a jointed single-piece composite panel according to one of claims 1 to 4, **characterised in that** the curing takes place in two steps, one after the production of the formed sheet (38) and the other after the fitting of the beams (46) on said sheet.

6. A method of manufacturing a jointed single-piece composite panel according to one of claims 1 to 5, **characterised in that**, prior to the performance of the first step, a layer (52) of highly conductive material is disposed on the mould.

7. A method of manufacturing a hinged single-piece composite panel according to one of claims 1 to 6, **characterised in that** reinforcement layers (48) are added to the beams (46, 54, 56) situated at the border of the panel.

8. A jointed single-piece composite panel obtained in accordance with the method according to one of claims 1 to 7, intended to constitute a jet-engine fan cover or a landing-gear hatch, **characterised in that** it comprises mounting means (16) such as joint fittings (36) and locking means (20), said mounting means and some of said locking means being directly attached to axial beams (54) of a network of beams comprising axial beams and circumferential beams.

9. A panel according to claim 8, **characterised in that** said mounting means and some of said locking means are directly attached to beams (54) by bolting.

10. A cover formed by a panel according to claim 8 or 9, **characterised in that** it comprises opening means (34) in the form in particular of a jack (35), said opening means being fixed to the same axial beam (54) that supports the joint fittings (36).

11. A cover formed by a panel according to claim 8 or 9, **characterised in that** the axial beams (54) that are to receive mounting means (16) and/or locking means (20) comprise cores (42) made from high-density alveolar material.

## Patentansprüche

1. Verfahren für die Herstellung einer an einem Träger anzulenkenden monolithischen Verbundplatte (12), insbesondere einer mittels Beschlägen angelenkten Formplatte, um eine Lüfterabdeckung eines Turbinenstrahltriebwerks oder eine Klappe eines Fahrwerks in einem Flugzeug zu verwirklichen, wobei die Platte ein Gitter aus Axial- und Umfangsträgern (46, 54, 56, 57) umfasst und Öffnungen aufweist, die für die Anordnung von Dienstelementen wie etwa Zugangstüren (22, 24), Klappen (28) und/oder Belüftungsgittern (26) vorgesehen sind, **dadurch gekennzeichnet, dass** es darin besteht:
in einem ersten Schritt eine Tafel (38) mit einer oder mehreren Verbundmateriallagen durch Drapieren auf der gesamten Fläche einer Gießform, die eine Form besitzt, die zu jener der Außenseite der zu verwirklichenden Platte konjugiert ist, zu verwirklichen;
in einem zweiten Schritt auf der Tafel (38) Gießkerne aus einem leichten Material (42) anzuordnen, die längs des Gitters in den freien Zonen der Platte (12) angeordnet sind;
in einem dritten Schritt auf den Kernen (42) wenigstens eine Widerstandslage (44) aus Verbundmaterial zu drapieren, derart, dass Träger (46) mit einem Ω-Profil verwirklicht werden, wovon die Schenkel mit der Tafel (38) in Kontakt sind, wobei in einem vierten Brennschritt die endgültigen mechanischen Eigenschaften der Verbundmaterialien durch diesen Brennschritt erhalten werden,
wobei die Axialträger (54) des Gitters in der Weise angeordnet sind, dass sie einen Weg zu den Beschlägen für jene Kräfte bieten, die von den nicht auf diese Beschläge ausgerichteten Umfangsträgern ausgehen, indem die für die Dienstelemente vorgesehenen Öffnungen umgangen werden.

2. Verfahren zum Herstellen einer angelenkten monolithischen Verbundplatte nach Anspruch 1, **dadurch gekennzeichnet, dass** gekrümmte Umfangsträger (57) verwirklicht werden.

3. Verfahren für die Herstellung einer angelenkten monolithischen Verbundplatte nach Anspruch 1 oder 2, **dadurch gekennzeichnet, dass** der transversale Querschnitt wenigstens eines Trägers (54, 56, 57) entlang seiner Längsachse verändert wird.

4. Verfahren für die Herstellung einer angelenkten monolithischen Verbundplatte nach einem der Ansprüche 1 bis 3, **dadurch gekennzeichnet, dass** die Gießkerne (42) aus einem wabenförmigen Material, insbesondere aus einem wabenförmigen Material mit hoher Dichte für die Träger (56, 57) bestehen und geeignet sind, Montagemittel (16) und/oder Verriegelungsmittel (20) aufzunehmen.

5. Verfahren für die Herstellung einer angelenkten monolithischen Verbundplatte nach einem der Ansprüche 1 bis 4, **dadurch gekennzeichnet, dass** das Brennen in zwei Schritten erfolgt, wovon einer nach der Verwirklichung der Formtafel (38) ausgeführt wird und der andere nach der Anordnung der Träger (46) auf der Tafel ausgeführt wird.

6. Verfahren für die Herstellung einer angelenkten monolithischen Verbundplatte nach einem der Ansprüche 1 bis 5, **dadurch gekennzeichnet, dass** vor der Ausführung des ersten Schrittes auf der Form eine Lage (52) aus einem stark leitenden Material angeordnet wird.

7. Verfahren für die Herstellung einer angelenkten monolithischen Verbundplatte nach einem der Ansprüche 1 bis 6, **dadurch gekennzeichnet, dass** Verstärkungslagen (48) auf jene Träger (46, 54, 56), die sich am Rand der Platte befinden, aufgebracht werden.

8. Angelenkte monolithische Verbundplatte gemäß dem Verfahren nach einem der Ansprüche 1 bis 7, die dazu bestimmt ist, eine Lüfterabdeckung eines Turbinenstrahltriebwerks oder eine Klappe eines Fahrwerks zu bilden, **dadurch gekennzeichnet, dass** sie Montagemittel (16) wie etwa Anlenkungsbeschläge (36) und Verriegelungsmittel (20) umfasst, wobei die Montagemittel und Bestimmte der Verriegelungsmittel direkt auf die Axialträger (54) eines Gitters von Trägern, das Axial- und Umfangsträger umfasst, aufgebracht sind.

9. Platte nach Anspruch 8, **dadurch gekennzeichnet, dass** die Montagemittel und Bestimmte der Verriegelungsmittel direkt auf die Träger (54) durch Bolzenverbindung aufgebracht sind.

10. Abdeckung, die durch eine Platte nach Anspruch 8 oder 9 gebildet ist, **dadurch gekennzeichnet, dass** sie Öffnungsmittel (34) insbesondere in Form eines Hubzylinders (35) umfasst, wobei die Öffnungsmittel an jenem Axialträger (54) befestigt sind, der die Anlenkungsbeschläge (36) trägt.

11. Abdeckung, die durch eine Platte nach einem der Ansprüche 8 oder 9 gebildet ist, **dadurch gekennzeichnet, dass** die Axialträger (54), die die Montagemittel (16) und/oder die Verriegelungsmittel (20) aufnehmen sollen, Kerne (42) aus einem wabenförmigen Material mit hoher Dichte enthalten.
